# EUROPEAN PATENT APPLICATION

(11) **EP 3 076 262 A1**
(43) Date of publication of application: **05.10.2016**
(21) Application number: 16161778.2
(22) Date of filing: 22.03.2016
(51) Int. Cl.: G05D 7/06, F02M 35/10, F02M 26/47

(54) **COMBINED TEMPERATURE, ABSOLUTE AND DIFFERENTIAL PRESSURE SENSOR ASSEMBLY**

(30) Priority: 02.04.2015 US 201514676903
(71) Applicant: Sensata Technologies, Inc., Attleboro, MA 02703 (US)
(72) Inventor: CHAPUT, Christopher, Rehoboth, MA Massachusetts 02769 (US); FROIO, Tony, Worcester, MA Massachusetts 01604 (US); LEONOR, Carolina Camejo, Santo Domingo (DO); LANGHANOJA, Shivesh S., Lewisville, TX Texas 75067 (US)
(74) Representative: Legg, Cyrus James Grahame

(57) **Abstract**

Methods and apparatus for a combined temperature, absolute and differential pressure sensor assembly. A sensor assembly includes a housing, the housing including a carrier, a differential pressure sensor, a manifold absolute pressure sensor, an orifice shared by both the differential pressure sensor and the manifold absolute pressure sensor, a printed circuit board (PCB), a thermistor, terminal pins, and a cover.

## Description

### BACKGROUND OF THE INVENTION

The invention relates generally to sensors, and more specifically to a combined temperature, absolute and differential pressure sensor assembly.

In general, a Manifold Pressure sensor (MAP sensor) is one of the sensors used in an internal combustion engine's electronic control system.

Engines that use a MAP sensor are typically fuel injected. The manifold absolute pressure sensor provides instantaneous manifold pressure information to the engine's electronic control unit (ECU). The data is used to calculate air density and determine the engine's air mass flow rate, which in turn determines the required fuel metering for optimum combustion and influence the advance or retard of ignition timing.

Today, manufacturers introduce Exhaust Gas Recirculation (EGR) into an engine to provide increased fuel economy and improved emissions.

What is need is a device that can incorporate percent EGR composition of air mass with pressure and temperature data to provide optimum engine performance.

### SUMMARY OF THE INVENTION

The following presents a simplified summary of the innovation in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention provides methods and apparatus for a combined temperature, absolute and differential pressure sensor assembly.

In general, in one aspect, the invention features a sensor assembly including a housing, the housing including a carrier, a differential pressure sensor, a manifold absolute pressure sensor, an orifice shared by both the differential pressure sensor and the manifold absolute pressure sensor, a printed circuit board (PCB), a thermistor, terminal pins, and a cover.

In another aspect, the invention features a sensor assembly including a housing, the housing including a carrier, a differential pressure sensor that outputs a differential pressure across an Exhaust Gas Recirculation (EGR) valve, a manifold absolute pressure sensor that outputs a manifold absolute pressure, a shared orifice for both the differential pressure sensor and the manifold absolute pressure sensor, a printed circuit board (PCB), a thermistor that outputs a manifold air temperature, terminal pins, and a cover.

Embodiments may have one or more of the following advantages.

The sensor assembly of the present invention provides pressure measurement of an intake manifold temperature and pressure in order to determine an amount of air mass flow being provided to an intake valve of an engine. In addition, the same apparatus provides a differential pressure measurement over an orifice before the intake manifold but after an Exhaust Gas Recirculation (EGR) valve in order to calculate the amount of exhaust gas air which is being mixed with intake air.

The sensor assembly of the present invention uses a single differential pressure element to minimize component count and eliminate high common mode inaccuracies present within designs that require two sense elements for a differential pressure calculation.

The sensor assembly of the present invention includes a housing which is designed to enable sensing of both a manifold air pressure as well as a true differential pressure without needing to subtract the output signal of two independent sensing elements.

The sensor assembly of the present invention is adapted to fit into an existing footprint of current Manifold Absolute Pressure/Temperature and Manifold Absolute Pressure (MAP/TMAP) sensors.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF THE DRAWINGS

The invention will be more fully understood by reference to the detailed description, in conjunction with the following figures, wherein:
FIG. 1 is an illustration of an exploded view of an exemplary sensor assembly.
FIG. 2 is an illustration of a cross sectional view of the sensor assembly of FIG. 1.

### DETAILED DESCRIPTION

The subject innovation is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details.

In the description below, the term "or" is intended to mean an inclusive "or" rather than an exclusive "or." That is, unless specified otherwise, or clear from context, "X employs A or B" is intended to mean any of the natural inclusive permutations. That is, if X employs A, X employs B, or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

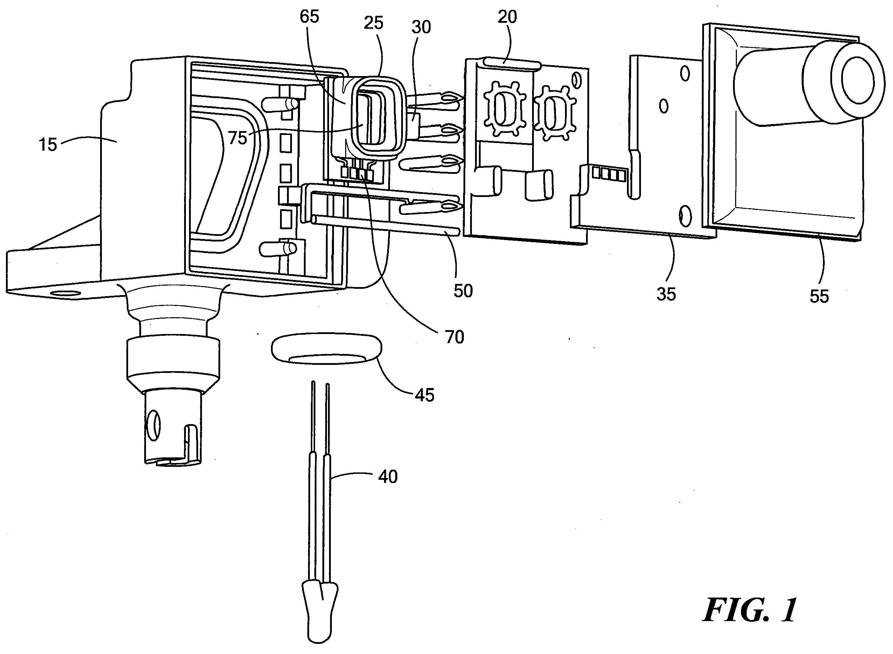

As shown in FIG. 1, an exploded view of an exemplary sensor assembly 10 includes housing 15 containing a carrier 20, a differential pressure sense element 25, a manifold absolute pressure sense element 30, a printed circuit board (PCB) 35, a thermistor 40, an O-ring 45, terminal pins 50 and a cover 55. The sensor assembly 10 provides a pressure measurement of intake manifold temperature and pressure in order to determine the air density and air mass flow being provided to an intake valve on an internal combustion engine. In addition, the sensor assembly 10 provides a differential pressure measurement over a pressure orifice before the intake manifold but after an Exhaust Gas Recirculation (EGR) valve in order to calculate an amount of exhaust gas that is being mixed with intake air. The differential pressure measurement can be used solely for measurement of EGR mass flow or can also be used as close loop feedback for the EGR valve.

In a preferred embodiment, the differential pressure sensor 25 is used with noble metallization on a ceramic substrate in order to sense recirculated exhaust gas pressure upstream of the pressure orifice. The sensor housing 15 and cover 55 are constructed to enable separation of the corrosive exhaust stream from any electronic components that may be susceptible to corrosion.

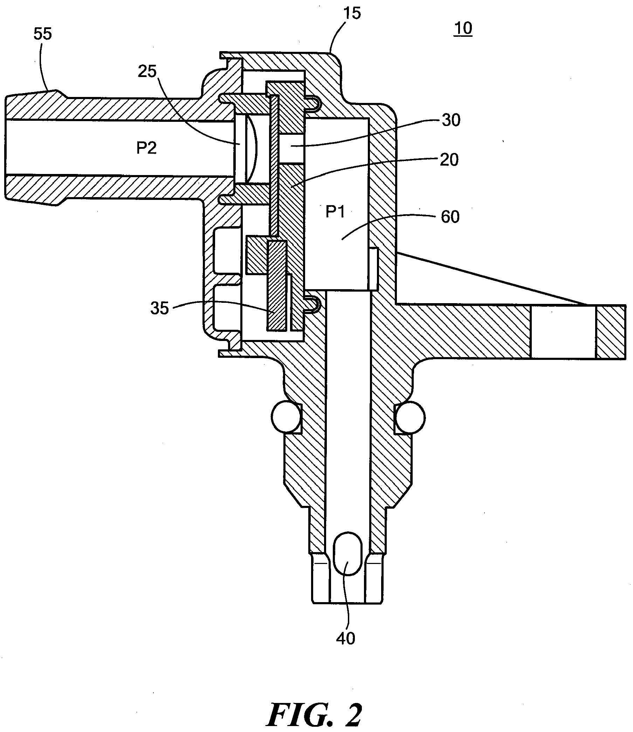

As shown in FIG. 2, in a cross sectional view of the sensor assembly 10, the housing 15 includes three sensing elements, i.e., the differential pressure sensor 25, the manifold absolute pressure sensor 30 and the thermistor 40. A rear absolute cavity 60 is shared by both the differential pressure sensor 25 and the manifold absolute pressure sensor 30. This enables a direct measurement of an absolute pressure of the intake manifold as well as a true, i.e., non-calculated, differential pressure measurement that is not subject to common mode effects or dissimilarity of properties. The exposure of both elements 25, 30 to the common mode absolute pressure enables the use of a more sensitive differential pressure sensing element instead of two lower sensitivity absolute pressure sensing elements, enabling increased accuracy of the differential pressure sensing measurement.

In a preferred embodiment, the sensor assembly 10 generates three discrete outputs. A first output is a manifold absolute pressure from the manifold absolute pressure sensor 30. The second output is differential pressure across an orifice downstream of the EGR valve from the differential pressure sensor 25, i.e., pressure P1 - pressure P2. A third output is a manifold air temperature from the thermistor 40.

In another embodiment, the sensor can be used across an EGR valve in order to calculate the different pressure across the EGR valve.

Incorporation of both the differential pressure sensor 25, the manifold absolute pressure sensor 30 in the singe housing 15 enables a true P2 - P1 differential pressure to output. Prior solutions used two absolute pressure sensor dies and P2 - P1 was calculated by an application specific integrated circuit. This type of calculation introduces excessive error due to absolute pressure sensor die irregularities that can create a larger measurement error when exposed to the same pressure, temperature and environment.

The single housing 15 removes a need for a calculated pressure signal for the differential pressure portion.

The sensor assembly 10 uses the cover 55 to gel dam 65 attach in order to create the high pressure cavity 60 that brings an upstream corrosive pressure media to a high pressure side of the differential pressure sensor 25. The gel dam 65 to cover seal enables media isolation of a more corrosive media than the P1 cavity pressure media. The sensor assembly 10 also includes an alumina circuit board 70 and a protective gel 75. The use of a gel dam 65 to cover seal enables a use of less robust (i.e., less expensive) materials in the remainder of the sensor assembly because the design allows for media isolation.

Incorporation of the carrier 20 enables calibration of the sensor assembly 10 on a subassembly level that facilitates a mass production of the sensor assembly 10 as opposed to a finished goods level. Calibration on a subassembly level enables higher throughput and reduces an overall value of work in progress line fallout and scrap. The use of adhesives with low modulus of elasticity allows for stress isolation of the calibration sub-assembly from the whole package, eliminating packaging stresses being transmitted to the calibration subassembly.

The sensor assembly 10 includes a thermal measurement of air using the thermistor 40. The thermistor 40 is connected to the housing 15 by a solder or resistance weld. The housing 15 is adapted to include a pocket that facilitates a dispense of epoxy/silicone adhesive over a top of the exposed thermistor 40 and terminal pins 50. This enables the thermistor 40 to be used in a corrosive environment and non-corrosion of the thermistor 40 and terminal pins 50 by protecting them from the corrosive environment. The potting also prevents migration of terminal metals between areas of different voltage potentials.

The sensor assembly 10 may also include an insert molded bushing (not shown), which along with a thermistor shroud, is used to mount the sensor assembly 10 into an intake manifold, enabling the sensor assembly 10 to be dropped in replacement of prior MAP/TMAP sensors with the added functionality of measuring a differential pressure from an upstream (higher) pre-orifice pressure. This differential pressure enables a redundant and closed feedback loop of the exhaust gas of the EGR valve in order to calculate a percentage of the exhaust gas into the intake manifold.

In a preferred embodiment, electronic signals output from the sensor assembly 10 are compensated by one independent application specific integrated circuit that compensates for thermal and pressure dependence of each individual sensing element 25, 30. Additionally, the sensor assembly 10 enables a use of a single digital application-specific integrated circuit (ASIC) that enables the compensated discrete outputs to be given via a Single Edge Nibble Transmission (SENT) digital communication protocol (see SAE J2716) to a customer control module (not shown).

The sensor assembly 10 may also be used as a half-bridge from each sense element 25, 30 in order to provide an analog signal to the customer control module. A half-bridge design compromises some of the diagnostic capabilities of a full bridge design but enables a use of a single ASIC, which results is a cost reduction.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment.

While this invention has been particularly shown and described with references to preferred embodiments thereof, it will be understood by those skilled in the art that various changes in form and details may be made therein without departing from the spirit and scope of the present application as defined by the appended claims. Such variations are intended to be covered by the scope of this present application. As such, the foregoing description of embodiments of the present application is not intended to be limiting. Rather, any limitations to the invention are presented in the following claims.

## Claims

1. A sensor assembly comprising:
a housing, the housing comprising:
a carrier;
a differential pressure sensor;
a manifold absolute pressure sensor;
an orifice shared by both the differential pressure sensor and the manifold absolute pressure sensor;
a printed circuit board (PCB);
a thermistor;
terminal pins; and
a cover.

2. The sensor assembly of claim 1 wherein the manifold absolute pressure sensor outputs a manifold absolute pressure.

3. The sensor assembly of claim 1 wherein the differential pressure sensor outputs a differential pressure across an Exhaust Gas Recirculation (EGR) valve.

4. The sensor assembly of claim 1 or 3 wherein the differential pressure sensor outputs a measurement across the orifice after the EGR valve.

5. The sensor assembly of claim 1 wherein the thermistor outputs a manifold air temperature.

6. The sensor assembly of claim 1 wherein the differential pressure sensor is used with noble metallization on a ceramic substrate in order to sense recirculated exhaust gas pressure upstream of the orifice.

7. The sensor assembly of claim 1 wherein the sensor housing and the cover are constructed to enable separation of a corrosive exhaust stream from electronic components that may be susceptible to corrosion.

8. The sensor assembly of claim 1 wherein the cover creates the orifice to bring an upstream corrosive pressure media to a high pressure side of the differential pressure sensor.

9. The sensor assembly of claim 1 wherein the carrier enables calibration of the differential pressure sensor and the manifold absolute pressure sensor on a subassembly level.

10. The sensor assembly of claim 1 wherein the thermistor is connected to the housing by a weld.

11. The sensor assembly of claim 1 or 10 wherein the housing further comprises an insert molded bushing, which, along with a thermistor shroud and 0-ring, are used to mount the housing into an intake manifold of an internal combustion engine.

12. The sensor assembly of claim 1 wherein outputs from the differential pressure sensor and the manifold manifold absolute pressure sensor are compensated by two independent application specific integrated circuits (ASICs).

13. The sensor assembly of claim 1 or 12 wherein outputs from the differential pressure sensor and the manifold manifold absolute pressure sensor are compensated by one independent ASIC.

14. The sensor assembly of claim 1 wherein outputs from the differential pressure sensor and the manifold manifold absolute pressure sensor originate from a single digital application-specific integrated circuit that gives the outputs via a SENT domain to a customer control module.

15. The sensor assembly of claim 1 wherein the housing and cover are constructed of plastic.
